Europäisches Patentamt

European Patent Office

Office européen des brevets

(11) Veröffentlichungsnummer: **0 425 765 A1**

## (12) EUROPÄISCHE PATENTANMELDUNG

(21) Anmeldenummer: 90114020.2

(22) Anmeldetag: 21.07.90

(51) Int. Cl.5: **G01N 29/04**

| | |
|---|---|
| Die Bezeichnung der Erfindung wurde geändert (Richtlinien für die Prüfung im EPA, A-III, 7.3). | Leonrodstrasse 54 W-8000 München 19(DE) |
| (30) Priorität: 14.09.89 DE 3930744 | (72) Erfinder: **Gebhardt, Wolfgang, Dr.** **Bachstrasse 4** **W-6683 Spiesen(DE)** |
| (43) Veröffentlichungstag der Anmeldung: **08.05.91 Patentblatt 91/19** | Erfinder: **Walte, Friedhelm** **Eisenbahnstrasse 40** **W-6657 Gersheim 5(DE)** |
| (84) Benannte Vertragsstaaten: **AT BE CH DE DK ES FR GB GR IT LI LU NL SE** | |
| (71) Anmelder: **FRAUNHOFER-GESELLSCHAFT ZUR FÖRDERUNG DER ANGEWANDTEN FORSCHUNG E.V.** | (74) Vertreter: **Rackette, Karl, Dipl.-Phys. Dr.-Ing** **Kaiser-Joseph-Strasse 179 Postfach 1310** **W-7800 Freiburg(DE)** |

(54) **Verfahren zur Erfassung von Rissen mittels Ultraschall.**

(57) Ein Ultraschallprüfkopf (2) mit einem Sende-Ultraschallwandler und einem Empfangs-Ultraschallwandler nutzt eine Wellenmodenumwandlung zwischen Transversalwellen (18) und Longitudinalwellen (10, 20) an einem Oberflächenriß (3) aus. Die Prüfzone hat ein Prüfzonenzentrum (24) mit einer maximalen Empfindlichkeit, das in einem Abstand von der Prüflingsoberfläche (4) liegt, bis zu dem Oberflä- chenrisse erwartet werden. Zwischen der Fehlertiefe der Oberflächenrisse (3) und dem vom Ultraschallprüfkopf (2) empfangenen Echo besteht ein monoton steigender Zusammenhang, so daß eine Fehlertiefenbestimmung durch Auswertung der Echohöhe ermöglicht ist.

Fig. 2

EP 0 425 765 A1

## VERFAHREN ZUR ERFASSUNG VON RISSEN

Die Erfindung betrifft ein Verfahren zur Erfassung von im wesentlichen rechtwinklig zur Prüflingsoberfläche eines Prüflings orientierten Rissen, mit Hilfe eines Sende-Ultraschallwandlers und eines Empfangs-Ultraschallwandlers, die über einen gemeinsamen Aufsetzbereich auf die Prüflingsoberfläche eines Prüfobjektes aufgesetzt werden und mit denen Ultraschallwellen in das Prüfobjekt eingestrahlt und aus diesem mit einem vom Einschallwinkel verschiedenen Winkel nach einer Wellenmoden-Umwandlung am Riß wieder empfangen werden, wobei als Einschall- und Empfangswinkel für die Ultraschallwandler Winkel gewählt werden, bei denen vom Empfangs-Ultraschallwandler nur die Ultraschallwellen erfaßt werden, für die am Riß eine Wellenmoden-Umwandlung zwischen Longitudinalwellen und Transversalwellen erfolgt, die auf der Prüflingsrückseite mit einander übereinstimmenden Einfalls- und Ausfallswinkein ohne Wellenmoden-Umwandlung in Richtung auf die Prüflingsoberseite zurückgespiegelt werden.

Ein derartiges Verfahren ist aus der DE 37 15 914 C2 bekannt und gestattet den Nachweis von Rissen, die sich im Innern eines Prüflings befinden. Je nach der Lage des Risses in Bezug auf den empfindlichsten Bereich der Prüfzone ergeben sich unterschiedlich hohe Signale, wobei die Signalamplitude nicht eindeutig einer Rißlänge oder einer Rißfläche zugeordnet werden kann. Gemäß Spalte 3, Zeilen 21 bis 25 der DE 27 15 914 C2 befinden sich die Prüfzonen in einem bestimmten Abstand parallel zur Prüflingsoberfläche, so daß Oberflächenrisse nicht erfaßt werden können.

Es ist bekannt, Oberflächenrisse unter Ausnutzung eines Winkelspiegeleffektes zu erfassen. Dabei wird ein im Impuls-Echobetrieb arbeitender Transversalwellenwinkelprüfkopf eingesetzt, um die prüfkopfferne Prüflingsrückseite unter 45 Grad zu beschallen. Ein rechtwinklig verlaufender Oberflächenriß reflektiert dabei den Ultraschallimpuls sowohl direkt durch einen spiegelnden Anteil als auch indirekt durch einen Streuanteil. Beide Wellenanteile werden mit einer Laufzeitdifferenz abhängig von der Rißtiefe am Empfänger aufsummiert und erzeugen bei kleinen Rißtiefen einen hohen Empfangsimpuls. Der spiegelnde Anteil und der Streuanteil kommen am Empfänger mit einer Phasendifferenz entsprechend den unterschiedlichen Laufzeiten an. Diese Phasendifferenz kann bei größeren Fehlertiefen zu destruktiven Interferenzen führen, so daß die Fehleramplitude schon bei kleinen Rißtiefen in die Sättigung gerät und dabei noch Oszillationen bzw. Mehrdeutigkeiten auftreten können. Ein weiterer Nachteil des bekannten Verfahrens zum Nachweis von Oberflächenrissen besteht darin, daß die Echohöhe sehr stark von der Rißschräglage abhängig ist.

Ausgehend von diesem Stand der Technik liegt der Erfindung die Aufgabe zugrunde, ein Verfahren der eingangs genannten Art so weiterzubilden, daß es den Nachweis und die Bewertung von oberflächenverbundenen oder oberflächennahen Rissen ohne Mehrdeutigkeiten und weniger empfindlich gegenüber Fehrlerschräglagen gestattet.

Diese Aufgabe wird erfindungsgemäß dadurch gelöst, daß die durch die Schwingergrößen beeinflußbaren Öffnungswinkel der Ultraschallwandler bei einem Einschallbzw. Empfangswinkel für den mit Longitudinalwellen arbeitenden Ultraschallwandler von etwa 22 Grad so gewählt werden, daß die durch die Überlagerung der den beiden Ultraschallwandlern zugeordneten aufgefächerten Ultraschall-Strahlenbündel definierte Prüfzone sich bis zu einer der beiden Prüflingsoberflächen erstreckt, wobei das Empfindlichkeitsmaximum der Prüfzone in derjenigen Ebene zwischen den beiden Prüflingsoberflächen liegt, bis zu der die längsten zu erwartenden Oberflächenrisse reichen, und daß die Ausgangssignale des Empfangs-Ultraschallwandlers einer die Empfangsamplitude in Rißtiefen umrechnenden Auswerteschaltung zugeführt werden.

Dadurch, daß statt des bekannten Winkelspiegeleffektes die Wellenmodenumwandlung in der erfindungsgemäßen Weise verwendet wird, werden nicht nur Mehrdeutigkeiten vermieden, sondern es wird die Möglichkeit der Bewertung oder Rißlängenmessung geschaffen. Die Prüfzone erstreckt sich ausgehend von der Prüflingsoberfläche mit einem verhältnismäßig wenig empfindlichen Bereich bis in eine etwas von der Prüflingsoberfläche entferntere Ebene, wobei die Empfindlichkeit laufend zunimmt. Auf diese Weise erzeugt ein in die Prüfzone hineinragender Riß ein umso größeres Signal im Empfangs-Ultraschallwandler je mehr er sich in Richtung des Prüfzonenzentrums erstreckt. Auf diese Weise wird der Rißlänge eine monotone Eichkurve zugeordnet, die ihre Sättigung für Rißlängen jenseits der Länge erreicht, die dem Abstand des Prüfzonenschwerpunktes oder Prüfzonenempfindlichkeitsmaximums zur Prüflingsoberfläche entspricht. Durch die Lage des Empfindlichkeitszonenmaximums und durch den Gradienten der Empfindlichkeit, d.h. der Stärke der Empfindlichkeitsabnahme innerhalb der Prüfzone kann die Abhängigkeit der Höhe des Geräteausgangssignals von der Fehlergröße beeinflußt und optimiert werden. Versuche haben gezeigt, daß dabei die Echohöhe monoton mit der Fehlertiefe steigt, wobei es möglich ist, zwischen kleinen und großen Rissen große Signalunterschiede zu erzeugen, um eine Rißtiefenbestimmung aus der Echohöhe über einen möglichst großen Meßbereich zu gewährleisten.

Zweckmäßige Ausgestaltungen und Weiterbildungen der Erfindung ergeben sich aus den Unteransprüchen und der nachfolgenden Beschreibung zweier Ausführungsbeispiele der Erfindung anhand der Zeichnung. Es zeigen:

Fig. 1 einen Ultraschallprüfkopf beim Einsatz des erfindungsgemäßen Verfahrens zum Nachweis eines Oberflächenrisses auf der Prüflingsrückseite,

Fig. 2 den Ultraschallprüfkopf und den auf der Prüflingsrückseite einen Riß aufweisenden Prüfling im Schnitt zusammen mit Äquiempfindlichkeitslinien zur Veranschaulichung der Lage und der Empfindlichkeitsverteilung der Prüfzone,

Fig. 3 einen Ultraschallprüfkopf zum Einsatz des erfindungsgemäßen Verfahrens bei der Untersuchung von Oberflächenrissen auf der Prüflingsoberseite in einer der Fig. 1 entsprechenden Darstellungsweise,

Fig. 4 eine der Fig. 2 entsprechende Darstellungsweise zur Veranschaulichung der Lage der Prüfzone bei Oberflächenrissen der Prüflingsoberseite und

Fig. 5 eine Draufsicht auf den Prüfkopf zur Veranschaulichung der gegenseitigen Lage des Sende-Ultraschallwandlers und des Empfangs-Ultraschallwandlers.

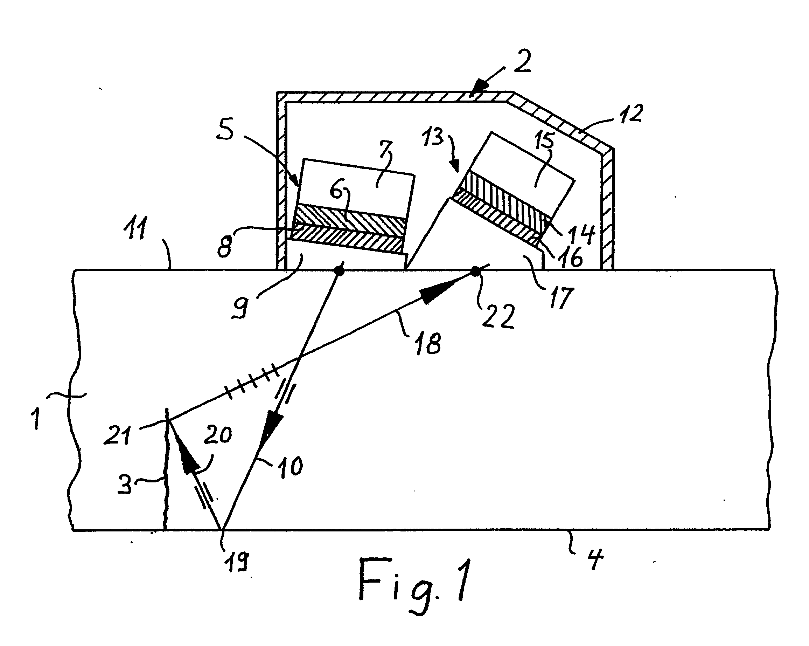

In Fig. 1 erkennt man einen Prüfling 1 mit einem aufgesetzten Ultraschallprüfkopf 2, der zur Erfassung und zur Bewertung eines Oberflächenrisses 3 dient, der sich ausgehend von der Prüflingsrückseite 4 durch den oberflächennahen Bereich des Prüflings 1 erstreckt.

Der Ultraschallprüfkopf 2 verfügt über einen Sende-Ultraschallwandler 5 mit einem Schwinger 6 aus Piezokeramik zur Erzeugung von Longitudinalwellen. Auf der Rückseite des Schwingers 6 befindet sich ein Dämpfungskörper 7, mit dessen Hilfe die Bandbreite der erzeugten Ultraschallimpulse bestimmt wird.

Der Sende-Ultraschallwandler 5 verfügt weiterhin über eine Anpaßschicht 8 zur Ankopplung des piezoelektrischen Schwingers 6 an einen Kunststoffkeil 9, dessen Keilwinkel so geformt ist, daß die Hauptachse 10 des ausgesandten aufgeweiteten Longitudinalwellen-Ultraschallstrahlenbündels einen Winkel von etwa 22 Grad bezüglich der Normalen auf die Prüflingsoberseite 11 hat.

Im gleichen Gehäuse 12 des Ultraschallprüfkopfes 2 befindet sich ein Empfangs-Ultraschallwandler 13 mit einem Schwinger 14, einem Dämpfungskörper 15, einer Anpaßschicht 16 und einem Kunststoffkeil 17, dessen Keilwinkel wesentlich größer als der Keilwinkel des Kunststoffkeils 9 ist. Der Sende-Ultraschallwandler 5 und der Empfangs-Ultraschallwandler 13 sind im Gehäuse 12 des Ultraschallprüfkopfes 2 im Abstand a angeordnet, wobei der Abstand a dem Abstand zwischen der Hauptachse 10 des Longitudinalwellenstrahlenbündels und der Hauptachse 18 des den Empfangs-Ultraschall wandler 13 beaufschlagenden Strahlenbündels ist.

Der Empfangs-Ultraschallwandler 13 empfängt entlang der Hauptachse 18 einfallende Transversalwellen, die durch Umwandlung der vom Sende-Ultraschallwandler 5 ausgesandten Longitudinalwellen am Oberflächenriß 3 entstehen.

Wie man in Fig. 1 erkennt, wird das vom Sende-Ultraschallwandler 5 entlang der Hauptachse 10 ausgesandte Longinalwellen-Ultraschallbündel an der Prüflingsrückseite 4 an der Stelle 19 zunächst reflektiert, ohne daß ein wesentlicher Energieverlust oder eine wesentliche Wellenmodenwandlung auftritt. Die Hauptachse 20 des reflektierten Longitudinalwellen-Ultra schallbündels verläuft spiegelbildlich zur Hauptachse 10 und schneidet den zu erfassenden und zu messenden Oberflächenriß 3 in einem Auftreffpunkt 21 des Oberflächenrisses 3. Aufgrund des flachen Einschallwinkels werden die auf den Oberflächenriß 3 auftreffenden Longitudinalwellen in ein Transversalwellenbündel umgewandelt, dessen Hauptachse 18 sich zwischen dem in Fig. 1 veranschaulichten Auftreffpunkt 21 und dem Mittelpunkt 22 unter dem Kunststoffkeil 17 erstreckt.

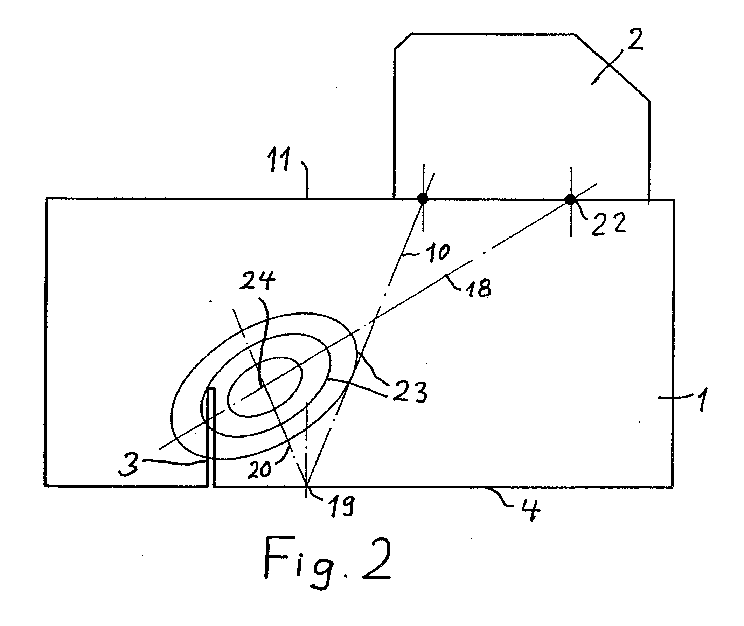

Fig. 2 zeigt den Ultraschallprüfkopf 2 ohne die Ultraschallwandler 5 und 13 zusammen mit dem Prüfling 1 und dem als Spalt dargestellten Oberflächenriß 3. Außerdem erkennt man in Fig. 2 eine Reihe von Äquiempfindlichkeitslinien 23 der Prüfzone. Die durch die Äquiempfindlichkeitslinien 23 veranschaulichte Prüfzone befindet sich in der Nähe der Prüflingsrückseite 4 und verlagert sich beim Verschieben des Ultraschallprüfkopfes 2 parallel zur Prüflingsoberseite 11 in Richtung auf den Riß 3 oder in der entgegengesetzten Richtung. Die durch die Äquiempfindlichtkeitslinien 23 veranschaulichte Prüfzone hat ihre maximale Empfindlichkeit im Prüfzonenzentrum 24. Das Prüfzonenzentrum 24 ist somit der räumliche Bereich mit der höchsten Empfindlichkeit. Dieser Bereich höchster Empfindlichkeit bzw. das Empfindlichkeitszonenmaximum ergibt sich aus der Geometrie des Ultraschallprüfkopfes 2, d.h. insbesondere aus den Einfalls- und Ausfallswinkeln der Longitudinalwellenund Transversalwellen-Ultraschallbündel und dem Abstand a zwischen dem Sende-Ultraschallwandler 5 und dem Empfangs-Ultraschallwandler 13. Außerdem hängt die Gestalt der Prüfzone, d.h. insbesondere der Verlauf des Gradienten der Empfindlichkeit innerhalb der Prüfzone davon ab, wie stark die Ultraschallbündel gebündelt oder aufgeweitet sind. Die Fokussierung oder Aufweitung der Ultraschallbündel ist von der Größe und Form der Schwinger 6 und 14 abhängig, was dem Fachmann auf dem Gebiet der Ultraschallprüfkopfe geläufig ist. Die Fig. 2 veranschaulicht somit die für den Ultraschallprüfkopf 2 angestrebte Lage der Prüfzone und der sich innerhalb der Prüfzone verändernden Empfindlichkeit, die im Prüfzonenzentrum 24 am größten und im Bereich der Prüflingsrückseite 4 am kleinsten ist.

Wenn von der Prüflingsrückseite 4 ein Oberflächenriß 3 nach innen in die durch die Äquiempfindlichkeitslinien 23 definierte Prüfzone hineinragt, gelangen Transversalwellen zum Empfangs-Ultraschallwandler 13 und erzeugen dort ein elektrisches Signal, das in einer in der Zeichnung nicht dargestellten Auswerteschaltung ausgewertet wird. Beim horizontalen Verfahren des Ultraschallprüfkopfes 2 verändert sich dieses Signal wobei das Signal ein Maximum erreicht, wenn die Verlängerung des Oberflächenrisses 3 das Prüfzonenzentrum 24 schneidet.

Wenn statt des erwähnten Oberflächenrisses 3 ein längerer Oberflächenriß 3 von dem Longitudinalwellenstrahlenbündel angeschallt wird, so ergibt sich im Empfangs-Ultraschallwandler 13 ein größeres Signal und zwar einerseits wegen der größer gewordenen Rißfläche und andererseits deswegen, weil der Oberflächenriß 3 in einen Bereich der Prüfzone hineinragt, der empfindlicher ist. Je mehr Äquiempfindlichkeitslinien 23 von einem Oberflächenriß 3 durchstoßen werden, umso höher ist das am Ausgang der Auswerteschaltung bzw. am Geräteausgang angezeigte Signal. Dieses Signal steigt monoton mit der Fehlertiefe an, wobei die Beziehung zwischen der Fehlertiefe und der Signalhöhe von der Dichte der Äquiempfindlichkeitslinien 23, d.h. vom Gradienten der Empfindlichkeit abhängig ist. In Fig. 2 ist ein oberflächenverbundener Oberflächenriß 3 dargestellt, jedoch lassen sich auch oberflächennahe Risse bezüglich ihrer Länge bewerten bzw. vermessen. Je nach den Schwingergrößen der Schwinger 6 und 14 ergeben sich unterschiedliche Öffnungswinkel und damit unterschiedliche Empfindlichkeitsgradienten.

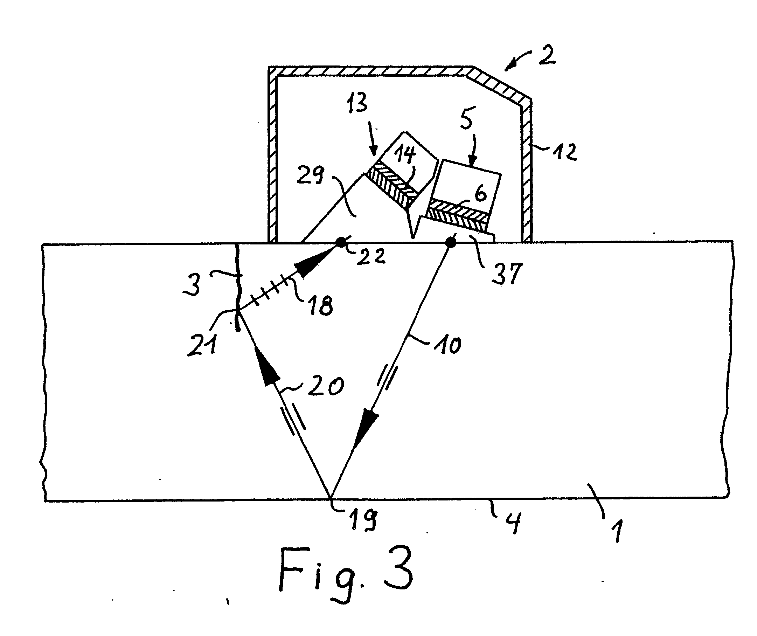

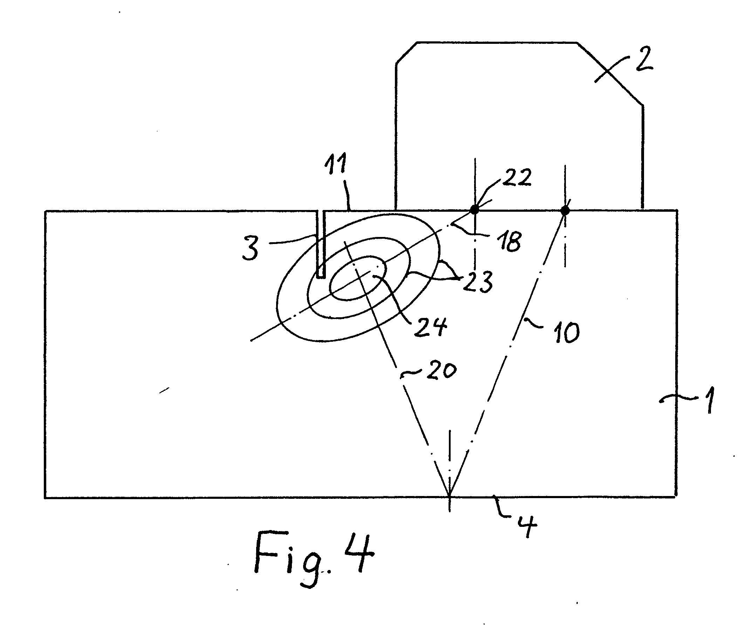

In Fig. 3 ist ein Ultraschallprüfkopf 2 dargestellt, der es gestattet, einen Oberflächenriß 3 zu erfassen und zu bewerten, der von der Prüflingsoberseite 11 ausgeht. Mit den in Fig. 1 dargestellten Elementen übereinstimmende Elemente haben in Fig. 3 die gleichen Bezugszeichen. Wie man erkennt, hat der Sende-Ultraschallwandler 5 eine gegenüber Fig. 1 vergrößerte Neigung und einen Kunststoffkeil 29 mit einem großen Keilwinkel, während der Kunststoffkeil 37 des Empfangs-Ultraschallwandlers 13 einen geringeren Keilwinkel hat. Auf diese Weise wird die Prüfzone mit den Äquiempfindlichkeitslinien 23 in der in Fig. 4 dargestellten Weise in die Nähe der Prüflingsoberseite 11 verlegt, so daß dort auftretende Oberflächenrisse 3 vermessen werden können.

Die in den Figuren 2 und 4 dargestellten Prüfzonenzentren 24 haben von der Prüflingsrückseite 4 bzw. von der Prüflingsoberseite 11 einen Abstand, der der maximal zu erwartenden Rißlänge entspricht. Auf diese Weise ist sichergestellt, daß Vergrößerungen der Rißlänge dazu führen, daß immer empfindlichere Bereiche der Prüfzone einen Signalbeitrag leisten, so daß die Echohöhe monoton mit der Fehlertiefe steigt.

Bei der beschriebenen Ausgestaltung des Ultraschallprüfkopfes 2 führen schräg liegende Risse zu unterschiedlich großen Signalen. Um die sich dadurch ergebenden Fehler möglichst zu vermeiden, werden schräg zur Prüflingsoberfläche verlaufende Oberflächenrisse 3 von beiden Seiten, d.h. Fig. 1 und 3 von links und von rechts, mit jeweils umgedrehter Orientierung des Ultraschallprüfkopfes 2 angeschallt. Je nachdem ob der Oberflächenriß 3 in Richtung auf den Ultraschallprüfkopf 2 geneigt oder von diesem weggekippt ist, ergibt sich ein größeres oder ein kleineres Signal, so daß einerseits die Fehlerschräglage erkannt werden kann und andererseits durch eine Mittelung der beiden Messungen die korrekte Fehlertiefe bestimmt werden kann.

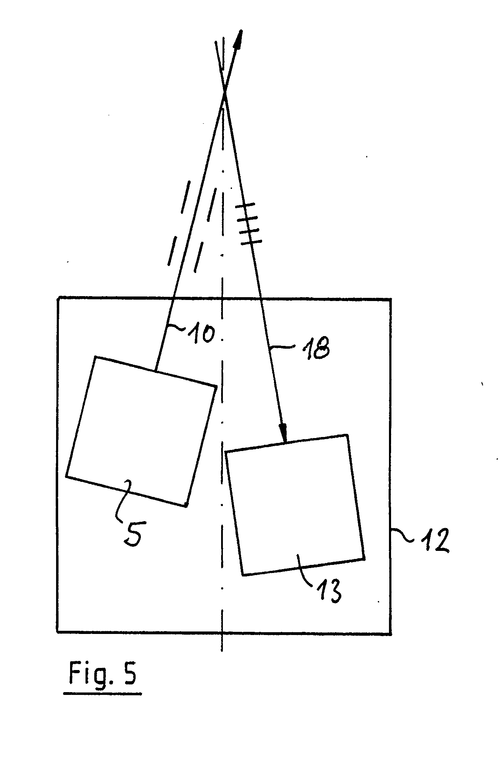

Je nach der Ausgestaltung des Ultraschallprüfkopfes 2 für eine bestimmte Dicke des Prüflings 1 und je nach der Lage der Prüfzone ergeben sich unterschiedliche Größen für den Abstand a. Dabei kann es vorkommen, daß der Abstand a so klein wird, daß der Sende-Ultraschallwandler 5 und der Empfangs-Ultraschallwandler 13 nicht mehr hintereinander angeordnet werden können, sondern in der in Fig. 5 veranschaulichten Weise nebeneinander versetzt im Gehäuse 12 untergebracht werden. Dabei können die Hauptachsen der Sende- und Empfangskeulen in der in Fig. 5 dargestellten Weise gekreuzt sein.

Selbstverständlich kann der in den Figuren 1 und 3 dargestellte Strahlengang auch umgekehrt durchlaufen werden. Dabei ändert sich lediglich die Ausbreitungsrichtung der Ultraschallwellen, wobei Transversalwellen eingeschaltet und Longitudinalwellen ausgewertet werden. Die Sende-Ultraschallwandler 5 dienen dann jeweils zum Empfang von Ultraschallwellen und die Empfangs-Ultraschallwandler 13 werden dann mit Signalen zum Erzeugen von Ultraschall beaufschlagt.

**Ansprüche**

1. Verfahren zur Erfassung von im wesentlichen rechtwinklig zur Prüflingsoberfläche eines Prüflings orientierten Rissen, mit Hilfe eines Sende-Ultraschallwandlers und eines Empfangs-Ultraschallwandlers, die über einen gemeinsamen Aufsetzbereich auf die Prüflingsoberfläche eines Prüfobjektes aufgesetzt werden und mit denen Ultraschallwellen in das Prüfobjekt eingestrahlt und aus diesem mit einem vom Einschallwinkel verschiedenen Winkel nach einer Wellenmoden-Umwandlung am Riß wieder empfangen werden, wobei als Einschall- und Empfangswinkel für die Ultraschallwandler Winkel gewählt werden, bei denen vom Empfangs-Ultraschallwandler nur die Ultraschallwellen erfaßt werden, für die am Riß eine Wellenmoden-Umwandlung zwischen Longitudinalwellen und Transversalwellen erfolgt, die auf der Prüflingsrückseite mit einander übereinstimmenden Einfalls- und Ausfallswinkeln ohne Wellenmoden-Umwandlung in Richtung auf die Prüflingsoberseite zurückgespiegelt werden, **dadurch gekenn zeichnet,** daß die durch die Schwingergrößen beeinflußbaren Öffnungswinkel der Ultraschallwandler bei einem Einschall-bzw. Empfangswinkel für den mit Longitudinalwellen arbeitenden Ultraschallwandler von etwa 22 Grad so gewählt werden, daß die durch die Überlagerung der den beiden Ultraschallwandlern zugeordneten aufgefächerten Ultraschall-Strahlenbündel definierte Prüfzone sich bis zu einer der beiden Prüflingsoberflächen erstreckt, wobei das Empfindlichkeitsmaximum der Prüfzone in derjenigen Ebene zwischen den beiden Prüflingsoberflächen liegt, bis zu der die längsten zu erwartenden Oberflächenrisse reichen, und daß die Ausgangssignale des Empfangs-Ultraschallwandlers einer die Empfangsamplitude in Rißtiefen umrechnenden Auswerteschaltung zugeführt werden.

2. Verfahren nach Anspruch 1, dadurch gekennzeichnet, daß für den mit Longitudinalwellen arbeitenden Ultraschallwandler ein Einschall- bzw. Empfangswinkel von 22 Grad ± 5 Grad gewählt wird.

3. Verfahren nach Anspruch 1 oder 2, dadurch gekennzeichnet, daß die Ultraschallwandler in einem sich in Richtung der Prüfspur erstreckenden Abstand angeordnet werden.

4. Verfahren nach einem der vorstehenden Ansprüche, dadurch gekennzeichnet, daß die Ultraschallwandler gegenüber der Prüfspur seitlich versetzt angeordnet werden.

5. Verfahren nach Anspruch 4, dadurch gekennzeichnet, daß die Ultraschallwandler in Richtung auf die Prüfspur verdreht werden.

6. Verfahren nach einem der vorstehenden Ansprüche, dadurch gekennzeichnet, daß die Ultraschallwandler entlang einer Prüflingsoberfläche mit entgegengesetzter Orientierung von beiden Seiten her über einen Riß verfahren werden und als Rißtiefe der Mittelwert der maximalen angezeigten Rißtiefen für jede Seite als korrigierte Rißtiefe bestimmt wird.

Fig.1

Fig. 2

Fig. 3

EP 0 425 765 A1

Fig. 4

EP 0 425 765 A1

Fig. 5

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl.⁵) |
|---|---|---|---|
| D,A | <u>DE - C2 - 3 715 914</u><br>(FRAUNHOFER-GESELLSCHAFT)<br> * Fig.; Ansprüche *<br>-- | 1,2 | G 01 N 29/04 |
| A | SOVIET INVENTIONS ILLUSTRA-<br>TED, EL Sektion, Woche 8631,<br>10. September 1986<br>DERWENT PUBLICATIONS LTD.,<br>London, S 03<br>  * SU-1201-754 (BRIDGE RES<br>    INST) *<br>-- | 1 | |
| A | SOVIET INVENTIONS ILLUSTRA-<br>TED, EL Sektion, Woche 8423,<br>18. Juli 1984<br>DERWENT PUBLICATIONS LTD.,<br>London, S 03<br>  * SU-996 934 (TSNIITMASH) *<br>-- | 1,2 | |
| A | <u>US - A - 4 658 649</u><br>(BROOK)<br>  * Zusammenfassung; Fig. 1 *<br>-- | 1,2 | **RECHERCHIERTE SACHGEBIETE (Int Cl.⁵)** |
| A | <u>US - A - 4 570 487</u><br>(GRUBER)<br>  * Zusammenfassung; Anspruch<br>    16; Fig. 1 *<br>---- | 1,2 | G 01 N |

Der vorliegende Recherchenbericht wurde für alle Patentansprüche erstellt.

| Recherchenort | Abschlußdatum der Recherche | Prüfer |
|---|---|---|
| WIEN | 07-12-1990 | NARDAI |